# EUROPEAN PATENT SPECIFICATION

(11) **EP 1 045 273 B1**
(45) Date of publication and mention of the grant of the patent: **05.07.2006**
(21) Application number: 00302481.7
(22) Date of filing: 27.03.2000
(51) Int. Cl.: G02F 1/1335, G02B 5/10

(54) **Reflection type liquid crystal display device with superior display quality**
Reflektive Flüssigkristall-Anzeigevorrichtung mit verbesserter Anzeigequalität
Dispositif d'affichage à cristal liquide du type réflectif ayant une qualité d'affichage supérieure

(30) Priority: 13.04.1999 JP 10586899
(43) Date of publication of application: 18.10.2000
(73) Proprietor: ALPS ELECTRIC CO., LTD., Ota-ku Tokyo 145 (JP)
(72) Inventor: Yoshii, Katsumasa, Ota-ku, Tokyo (JP)
(74) Representative: Kensett, John Hinton

(56) References cited:
- WO-A-97/39369
- PATENT ABSTRACTS OF JAPAN vol. 1998, no. 14, 31 December 1998 (1998-12-31) -& JP 10 232395 A (SUMITOMO CHEM CO LTD;OPTREX CORP), 2 September 1998 (1998-09-02)
- PATENT ABSTRACTS OF JAPAN vol. 1996, no. 07, 31 July 1996 (1996-07-31) -& JP 08 068997 A (HITACHI LTD), 12 March 1996 (1996-03-12)
- PATENT ABSTRACTS OF JAPAN vol. 1999, no. 02, 26 February 1999 (1999-02-26) -& JP 10 311910 A (ALPS ELECTRIC CO LTD), 24 November 1998 (1998-11-24)
- PATENT ABSTRACTS OF JAPAN vol. 1999, no. 05, 31 May 1999 (1999-05-31) -& JP 11 042649 A (ALPS ELECTRIC CO LTD), 16 February 1999 (1999-02-16)

## Description

The present invention relates to a liquid crystal display device and, in particular, to a reflection type liquid crystal display device which effects display by using external light.

Recently, in portable information apparatuses such as notebook PCs and electronic notebooks, there is a demand for an increase in battery service life, which leads to an increase in battery capacity and a decrease in power consumption of the apparatus. As low power consumption displays, liquid crystal display devices are widely used. In particular, a reflection type liquid crystal display device using no backlight is effective in achieving a reduction in power consumption.

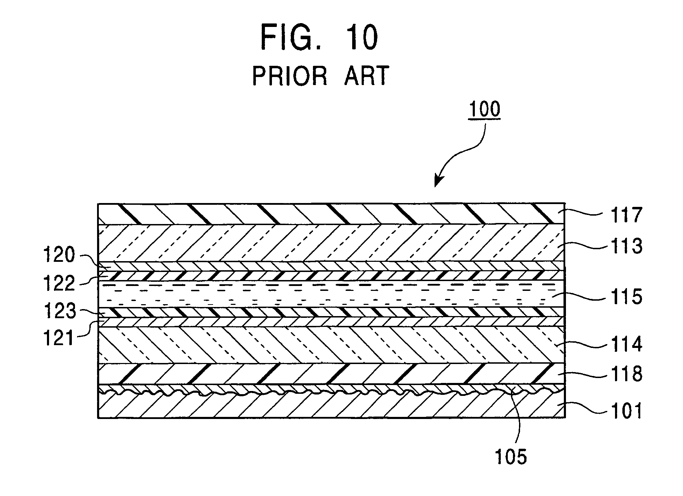

As shown in Fig. 10, a conventional reflection type display device comprises a pair of glass substrates 113 and 114, transparent electrode layers 120 and 121 provided on the opposed surfaces of the glass substrates, liquid crystal orientation films 122 and 123 respectively provided on the transparent electrode layers 120 and 121, and a liquid crystal layer 115 provided between the orientation films 122 and 123. And, first and second polarizing plates 117 and 118 are provided on the outside of the glass substrates 113 and 114, and on the outside of the second polarizing plate 118, there is provided a reflection plate 101, with the surface of a reflection film 105 being directed to the second polarizing plate 118.

In the reflection type liquid crystal display device 100, constructed as described above, light impinging upon the first polarizing plate 117 undergoes linear polarization, and is further transmitted through the liquid crystal layer 115 to become elliptically polarized light. And, the light which has become elliptically polarized light is turned into linearly polarized light by the second polarizing plate 118, reflected by the reflection plate 101, again transmitted through the second polarizing plate 118 and the liquid crystal layer 115 before it is emitted from the first polarizing plate 117.

In the conventional reflection type liquid crystal display device, the reflection plate 101 is endowed with scattering reflection characteristics by, for example, forming a reflection layer consisting of aluminum or the like on the rough surface of a metal film, synthetic paper or the like.

Such a reflection plate has wide scattering angle characteristics, so that it is difficult to enhance the bright in a particular direction frequently viewed as in the case of the front of the display surface as seen from the observer. As a result, the display is rather dark although the angle of sight is wide.

On the other hand, when a mirror surface is used as the reflection surface, it is possible to obtain very bright characteristics in the specular direction with respect to the incident light. However, the display is dark even when the specular direction is slightly deviated from.

In the ideal reflection plate characteristics required, the angle of sight should be wide and much brightness should be obtained.

In view of this, it is necessary for scattering reflection to occur effectively in the direction required. To obtain a reflection plate having such characteristics, it is useful to design a reflection plate of a configuration in which the reflection scattering angle is intentionally controlled. To avoid coloring due to the interference of the reflection light, it is desirable for the arrangement to be random.

To control the reflection scattering angle, it might be possible to form controlled minute protrusions and recesses by machining or the like. However, when a completely random arrangement is adopted, the coordinate data on the work points is enormous, which is undesirable from the viewpoint of practicality.

Or, it might be possible to generate random coordinates each time machining is conducted. In that case, however, it would be difficult to control the reflection scattering angle.

Actually, it is a method easily conducted from the view point of designing and machining to form a random arrangement in a small-scale region and repeat this.

In a possible example, recesses (or protrusions) are sequentially formed on the surface in a mechanical manner. It is a convenient method to form one or a plurality of shapes at one time in a certain place, feed the sequentially in the X-direction in a fixed pitch, feed the machining position in the Y-direction after machining for a predetermined length, and perform surface processing while feeding in the X-direction again.

As a result of this machining, a structure is obtained in which there is a repeated arrangement in the feeding direction in machining.

Assuming that a reflection plate having a repeated arrangement is combined with a stripe-shaped electrode for display electrode, when the directions of these repeated structures do not completely coincide but make a slight angle, periodical overlapping occurs between these patterns, and a fringe-like pattern which is oblique with respect to the pattern direction, a so-called moire fringe, is viewed. Further, even in the case in which a reflection type liquid crystal display device of this type is combined with color filters to perform color display, a moire fringe is to be viewed between the repeated structure of the protrusions and recesses of the reflection plate and the repeated alignment structure of the colored pixels of the color filters, which impairs the display quality.

Prior art arrangements are known from JP 10232395, JP08068997, JP 10311910 and JP 11042649.

The present invention has been made with a view toward solving the above problem. It is an object of the present invention to provide a liquid crystal display device in which oblique moire fringe is not easily viewed while using a reflection plate of satisfactory reflection characteristics with repeated recess arrangement and which is superior in display quality.

In accordance with the present invention, there is provided a reflection type liquid crystal display device comprising an upper and a lower substrate, a liquid crystal layer provided between the upper and the lower substrate, a plurality of stripe-like transparent electrodes formed on the side of at least one of the opposed surfaces of the upper and the lower substrate so as to extend in a predetermined direction, and a reflection member arranged on the liquid crystal layer side of the lower substrate or on the opposite surface side thereof ; wherein the reflection member has a large number of recesses arranged in a direction, wherein the direction in which the recesses are arranged is offset by an angle of 8 degrees from the direction in which the stripe-like transparent electrodes extend, and wherein the inner surfaces of the recesses constitute part of spherical surfaces and are formed so that adjacent recesses overlap each other, the depth of the recesses and the pitch of adjacent recesses varying within predetermined ranges.

Preferably, a reflection type liquid crystal display device which adopts an STN or TFT system wherein the reflection member is provided on the liquid crystal layer side of the lower substrate and wherein a polarizing plate is provided on the upper substrate.

In this reflection type display device, the moire fringe interval is small, so that moire fringe is not easily viewed, whereby it is possible to improve the display quality of a liquid crystal display device.

Preferably, the depth of the recesses is in the range of 0.1 to 3µm, the inclination angle distribution of the recess inner surface is in the range of -35 degrees to +35 degrees and the pitch of adjacent recesses is in the range of 5 µm to 50 µm.

The "recess depth" is the distance from the surface of the reflection member to the bottom of the recess, and the "pitch of the adjacent recesses" is the distance between the centers of the recesses which are circular in plan view. Further, the "inclination angle of the recess inner surface" is the angle of the inclined surface with respect to the horizontal surface in the minute range when a minute range of 0.5 µm width is taken at an arbitrary position on the inner surface of the recess 4. It is assumed that the angle of the reflection inclined surface of each recess with respect to a normal extending from the reflection member surface is positive and that the angle of the opposed inclined surface is negative.

In this preferable reflection member, it is important that the inclination angle distribution is set in the range of -35 degrees to +35 degrees and that the recess pitch is arranged random with respect to all directions of the plane. If there should be any regularity in pitch in adjacent recesses, the interference colors of light would appear, coloring the reflection light. If the inclination angle distribution of the recess inner surface is beyond the range of -35 degrees to +35 degrees, the inclination angle of the reflection light is too wide, and the reflection intensity deteriorates, making it impossible to obtain a bright reflection plate (The diffusion angle of the reflection light is over 70 degrees in the air, resulting in a reduction in the reflection intensity peak in the interior of the liquid crystal display device and an increase in total reflection loss.

Further, when the recess depth is more than 3 µm, the vortex of the protrusion cannot be buried in the flattening film when flattening the recesses in the post process, making it impossible to achieve a desired flatness.

When the pitch of the adjacent recesses is less than 5 µm, there is a limitation to the preparation of the mould for forming the reflection member, and a configuration which would provide desired reflection characteristics cannot be obtained, interference light, etc. being generated. In fact, when a diamond indenter having a diameter of 30 to 100 µm that can be used for the preparation of the mould for forming the reflection member is used, it is desirable for the pitch of the adjacent recesses to be 5 to 50 µm.

It is desirable for the pitch of stripe-like transparent electrodes arranged side by side to be 50 to 500 µm. Further, it is desirable for each line width to be 40 to 490 µm.

If the pitch of the transparent electrodes arranged side by side is less than 50 µm, there is a limitation to the machining of the transparent electrodes; if it is more than 500 µm, the pixels become rather large, making it impossible to obtain desired display characteristics and display quality.

Further, if the line width between the electrodes is less than 40 µm, there is a limitation to the machining of the transparent electrodes; if it is more than 490 µm, the pixels become large, making it impossible to obtain desired display characteristics and display quality.

In the reflection member, the two orthogonal directions in which a large number of protrusions and recesses are arranged are deviated by an angle of 8 degrees from the two directions in which the orthogonal stripe-like electrodes extend.

In this reflection type liquid crystal display device, the moire fringe can be reduced to such a degree that it is hard to view, and the reflection member provides a high reflection efficiency in all directions, so that, compared with the conventional reflection type color liquid crystal display device, it is possible to provide a reflection type color display device which is brighter and which has more satisfactory display quality.

As the above reflection member and stripe-like electrodes, it is possible to use the reflection member and stripe-like electrodes in the above-described reflection type liquid crystal display device.

It is desirable to arrange a plurality of colored layers forming color filters in parallel rows at an inter-row pitch of 50 to 500 µm, and the width of each colored layer is preferably 40 to 490 µm. If the inter-row pitch of the colored layers arranged in parallel rows is less than 50 µm, there is a limitation to the processing of the colored layers; if it is more than 5010 µm, the colour pixels become rather large, making it impossible to achieve desired display characteristics and display quality.

Further, if the width of each colored layer is less than 40 µm, there is a limitation to the processing of the colored layers; if it is more than 490 µm, the coloured pixels become rather large, making it impossible to achieve desired display characteristics and display quality.

Embodiments of the invention will now be described, by way of example only, with reference to the accompanying drawings, in which:
Fig. 1 is a sectional view of a reflection type liquid crystal display device not according to the present invention;
Fig. 2 is a perspective view showing a part of the reflection member shown in Fig. 1;
Figs. 3A through 3F are process diagrams showing the process for producing the reflection member shown in Fig. 1;
Fig. 4 is a diagram showing the process for producing the mother pattern for producing the reflection member shown in Fig. 3, showing how the mother base material is depressed by a diamond indenter;
Fig. 5 is a plan view of a pattern in which the mother base material is depressed by the diamond indenter shown in Fig. 4;
Fig. 6 is a plan view of all the recesses of the mother base material after the depression by the diamond indenter shown in Fig. 4;
Fig. 7 is a plan view showing the arrangement relationship between the transparent electrodes and a large number of equidistant rows of recesses of a reflection member;
Fig. 8 is a sectional view showing an embodiment of a reflection type color liquid crystal display device according to the invention;
Fig. 9 is a plan view showing the arrangement relationship between the transparent electrodes, the colored pixels of the color filters and the large number of rows of recesses of the reflection member shown in Fig. 8; and
Fig. 10 is a sectional view showing another conventional reflection type liquid crystal display device.

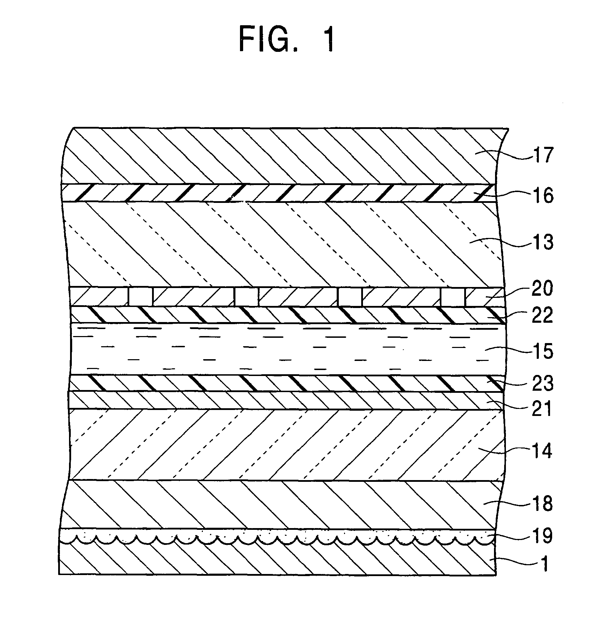

Fig. 1 is a sectional view showing a first comparative example of a reflection type liquid crystal display device not according to the invention. This reflection type liquid crystal display device includes a display side glass substrate 13 and a backside lower glass substrate 14 having a thickness of, for example, 0.7 mm. On the inner side of these glass substrates, there are formed a plurality of stripe-like transparent display electrodes 20 and 21. Further, a liquid crystal layer 15 is provided between these electrodes. A phase plate 16 consisting of polycarbonate resin or polyacrylate resin or the like is provided on the upper side of the display side glass substrate 13, and further, a first polarizing plate 17 is arranged on the upper side of the phase plate 16. Further, on the lower side of the backside glass substrate 14, there are sequentially provided a second polarizing plate 18, an adhesive member 19 and a plate-like reflection member 1.

There are provided a plurality of lower transparent electrodes 21, which extend laterally in Fig. 1 and are arranged side by side at fixed intervals. The plurality of upper transparent electrodes 20 extend in the direction passing through the plane of Fig. 1 and are arranged side by side at fixed intervals.

The reflection member 1 is attached to the lower side of the second polarizing plate 18 such that it is opposed to the surface on which protrusions and recesses are formed, and the space between the reflection member 1 and the second polarizing plate 18 is filled with an adhesive member 19 consisting of a material such as glycerine which does not adversely affect the refractive index of light.

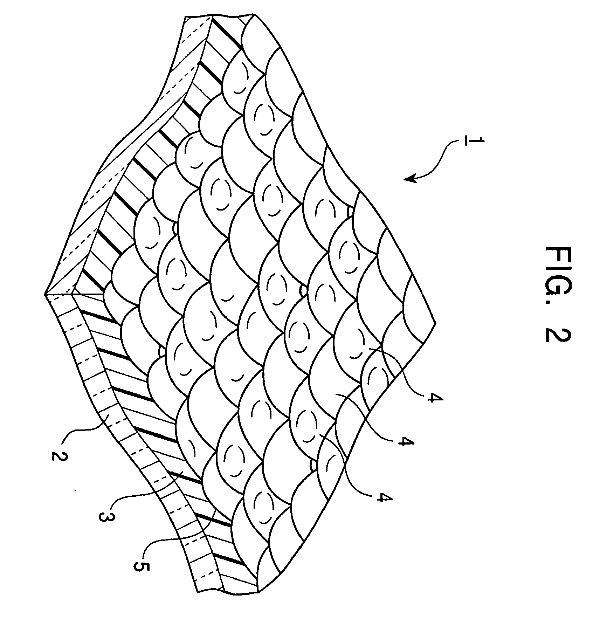

As shown in Fig. 2, the reflection member 1 comprises a substrate 2 consisting, for example, of glass. A flat resin base 3 (reflection member base) consisting of a photosensitive resin or the like is provided on the substrate 2. On the surface of the resin base 3, a large number of recesses 4, the inner surfaces of which constitute part of spherical surfaces, are continuously formed so as to overlap each other. Thereon, a reflection film 5 consisting of a thin film of aluminum, silver or the like is formed by evaporation or printing.

It is desirable that the depth of the recesses 4, which is at random, be in the range of 0.1 to 3 µm, and that the adjacent recesses 4 be arranged at random at a pitch in the range of 5 to 50 µm, the inclination angle of the inner surfaces of the recesses 4 being set in the range of -35 degrees to +35 degrees.

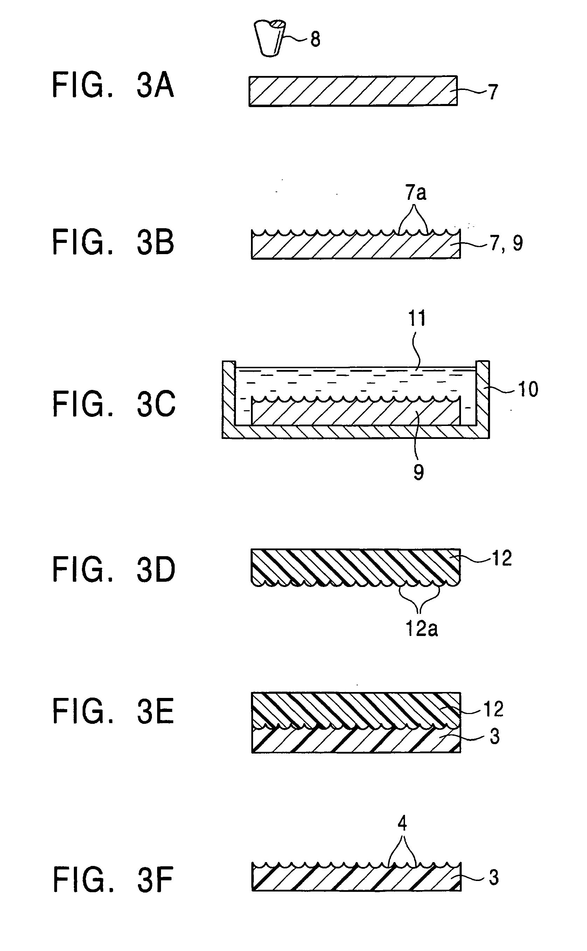

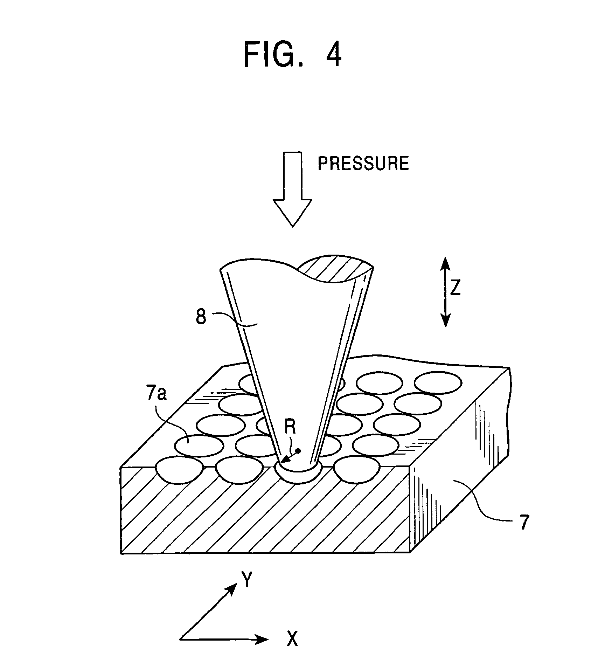

The reflection member 1 is produced as shown in Figs. 3 through 7.

First, as shown in Fig. 3(a), a mother base material 7 whose surface is flat and which consists, for example, of brass, stainless steel or tool steel, is secured in position on a table of a rolling machine. Then, the surface of the mother base material 7 is depressed by a diamond indenter 8 whose forward end has a spherical configuration with a predetermined diameter R, and the operation of depressing the mother base material while horizontally moving the mother base material 7 is repeated a large number of times, whereby a large number of recesses 7a whose depths and whose arrangement pitches differ are formed by rolling on the surface of the mother base material 7, thereby obtaining a reflection member base 9 as shown in Fig. 3(b). In the rolling apparatus used, the table for securing the mother base material 7 in position moves in the horizontal X and Y-directions with a resolution of 0.1 µm, and the diamond indenter 8 moves in the vertical direction (Z-direction) with a resolution of 1 µm. It is desirable that the diameter R of the forward end of the diamond indenter 8 be approximately 10 to 100 µm. For example, when the depth of the recesses 7a is approximately 2 µm, the diameter R of the forward end of the indenter is 30 to 50 µm, and when the depth of the recesses 7a is approximately 1 µm, the diameter R of the forward end of the indenter is 50 to 100 µm.

The rolling by the diamond indenter is conducted by the following procedures.

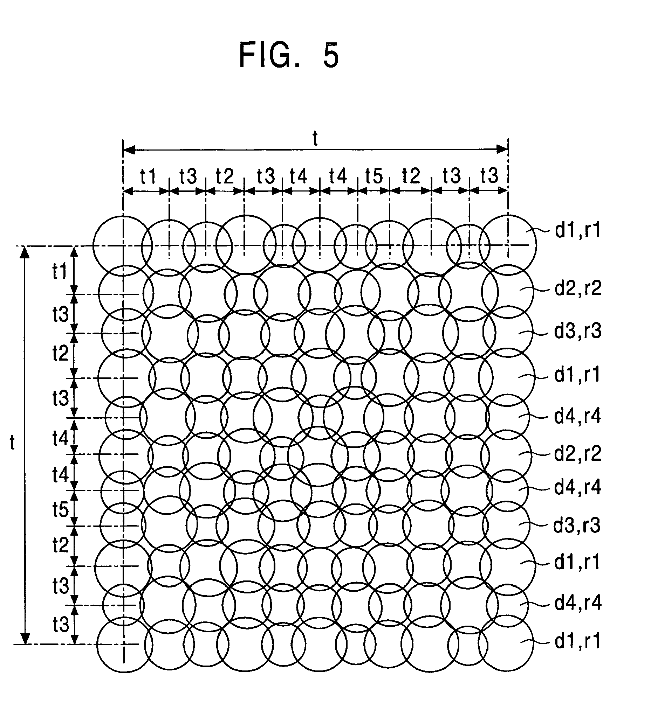

As shown in Fig. 5, which is a plan view showing the rolling pattern, the pitches of the laterally adjacent recesses from the left are t1 (= 17 µm), t3 (= 15 µm) , t2 (= 16 µm), t3,t4 (= 14 µm), t4,t5 (= 13 µm), t2, t3,t3. The pitches of vertically adjacent recesses from above are similar to the above pattern. And, four depths in the range of 1.1 to 2.1 µm are set (indicated by d1, d2, d3 and d4 in the drawing), and the depression is effected, whereby there are four radii of the circular recesses after depression: r1 (= 11 µm) , r2 (= 10 µm), r3 (= 9 µm) and r4 (= 8 µm). For example, the depth radii in a longitudinal row are: r1, r2, r3, r1, r4, r2, r4, r3, r1, r4, r1 from above.

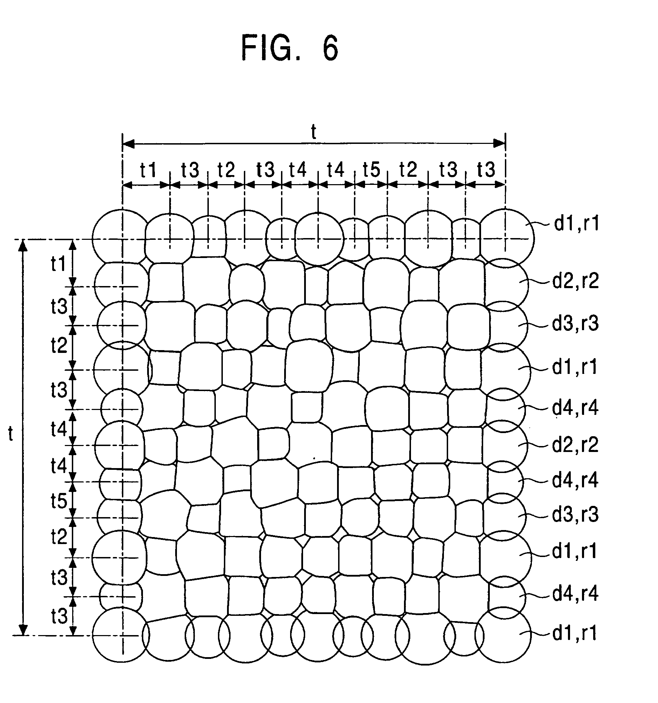

In the actual order of rolling, for example, all the recesses of the depth d1 in the uppermost horizontal row are firs formed and then the recesses of the depth d2, the recesses of the depth d3 and the recesses of the depth d4 are formed, thus repeating the rolling operation for the four depths to form all the recesses in the uppermost lateral row. After this, a similar operation is conducted on the second horizontal row from above. In this way, all the recesses in the pattern are formed. Fig. 5 shows a rolling pattern of t = 150 µm square, the entire reflection member being formed by repeating this pattern. As shown in Fig. 5, the adjacent depression recesses partly overlap each other, so that the plan view configuration of all the recesses after the completion of the rolling operation is as shown in Fig. 6.

After this, as shown in Fig. 3(c), the mother pattern 9 is accommodated and arranged in a box-like container 10, and a resin material 11 such as silicone is poured into the container 10, the resin material being allowed to stand at room temperature to cure. The resin product cured is extracted from the container 10 and the unnecessary portion thereof is cut off, whereby, as shown in Fig. 3(d), a transfer pattern 12 is formed, which includes a pattern surface 12a having a large number of protrusions of a configuration reverse to the large number of recesses constituting the pattern surface of the mother pattern 9.

Next, a photosensitive resin liquid such as acrylic type resist, polystyrenene type resist, azide rubber type resist, or imide type resist, is applied to the upper surface of the glass substrate by spin coating, screen printing, spraying, etc. And, after the completion of the application, pre-baking is conducted, in which the photosensitive resin liquid on the substrate is heated for more than one minute in a temperature range, for example, of 80 to 100°C by using a heating device such as a heating furnace or a hot plate, to thereby form a photosensitive resin layer on the substrate. However, the pre-baking conditions differ according to the kind of photosensitive resin used, so that it is naturally possible to perform the processing at a temperature and for a time beyond the above-mentioned ranges. It is desirable for the thickness of the photosensitive resin layer to be in the range of 2 to 5 µm.

After this, as shown in Fig. 3(e), by using the transfer pattern 12 shown in Fig. 3(d), the pattern surface 12a of this transfer pattern 12 is pressed against the photosensitive resin layer 3 on the glass substrate for a fixed period of time, and then the transfer pattern 12 is detached from the photosensitive resin layer 3. In this way, as shown in Fig. 3(f), the protrusions of the transfer pattern surface 12a is transferred to the surface of the photosensitive resin layer 3 to form a large number of recesses 4. As the value of the pressure applied at the time of pattern pressing, a value is preferably selected which is adapted to the kind of photosensitive resin used; for example, it is a pressure of approximately 30 to 50 kg/cm². Regarding the press time also, it is desirable to select a value corresponding to the kind of photosensitive resin used. For example, it is approximately 30 seconds to 10 minutes.

After this, rays such as ultraviolet rays (g, h, i-rays) for curing the photosensitive resin layer 3 are applied from the back side of the transparent glass substrate to cure the photosensitive resin layer 3. In the case of the above-mentioned photosensitive resin, an intensity of 50 mJ/cm² or more is enough for the rays such as ultraviolet rays applied to cure the photosensitive resin layer. However, depending upon the kind of photosensitive resin layer, it is naturally possible to apply the rays in an intensity other than the above. And, post baking is conducted, in which by using a heating device such as a heating furnace or hot plate which is the same as used in the pre-baking, the photosensitive resin layer 3 on the glass substrate 3 is heated for one minute or more at approximately 240°C to bake the photosensitive resin layer 3 on the glass substrate.

Finally, on the surface of the photosensitive resin layer 3, a film of aluminum or the like is formed by electron beam evaporation or the like to form a reflection film 5 along the surface of the recess, thereby completing the reflection member 1.

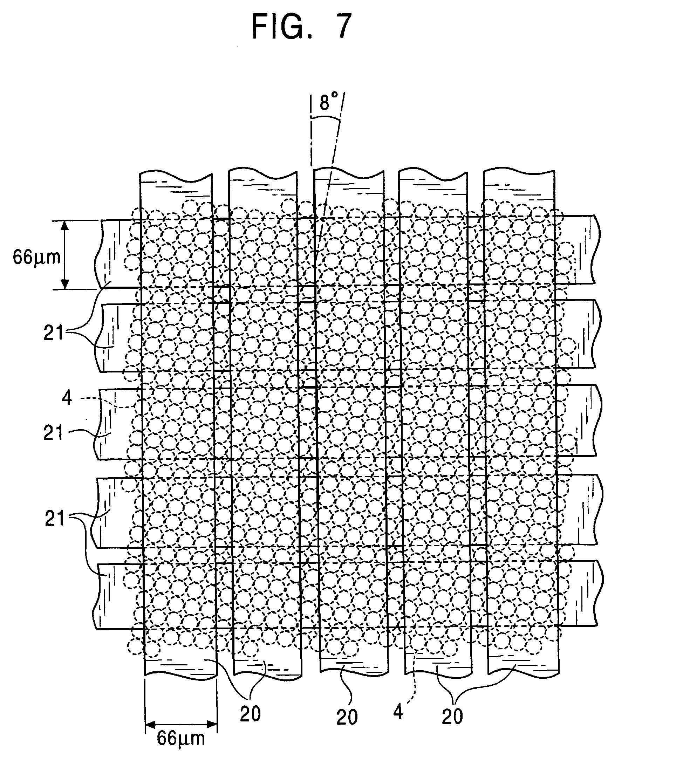

Fig.7 shows another comparative example not according to the invention.

As shown in Fig. 7, the transparent electrodes 20 and 21 have a stripe-like pattern, and when the pitch of the adjacent row of recesses in the reflection member 1 is 10 to 20 µm, they are formed at a vertical pitch of 76 µm and with a shorter width of 66 µm.

As shown in Fig. 7, the direction in which the rows of recesses 4 of the reflection member 1 are arranged is set beforehand such that it makes an angle of 8 degrees with respect to the direction in which the stripe-like transparent electrodes 20 extend. In Fig. 7, this condition corresponds to the arrangement in which the pitch p1 of adjacent recesses is ≠ 15 µm, and θ = 8 degrees.

Since the pitch of the moire fringe generated as a result of the reflection member 1 being superimposed on the transparent electrodes 20 is approximately 1.07 µm, so that the moire fringe is not easily viewed. Further, if an angle deviation of 0.5 degrees occurs, the change in the pitch of the moire fringe generated as a result of superimposing is approximately 7 µm, so that the change occurs to a small degree.

In the reflection type liquid crystal display device of this comparative example not according to the invention, instead of providing the reflection member 1 outside the lower substrate 14, the reflection member 1 may be directly formed on the opposed surface of the lower substrate 14, for example, on the substrate 14. In this case also, when the stripe electrodes 20 and 21 and the reflection member 1 are the same as those used in the above comparative example, the direction in which the stripe-like electrodes 20 extend intersects the rows of recesses 4 of the reflection member 1 at an angle of 8 degrees as shown in Fig. 7.

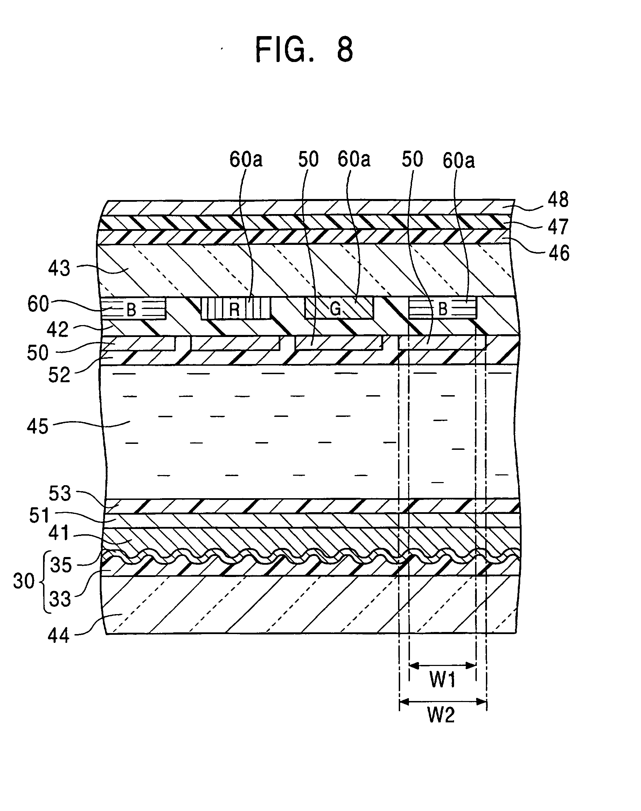

A first embodiment of a reflection type color liquid crystal display device according to the invention will be described with reference to Fig. 8. The basic construction of this embodiment is the same as that of the above-described comparative examples of reflection type liquid crystal display devices.

As shown in Fig. 8, in this liquid crystal display device, of upper and lower opposed glass substrates 43 and 44, there are sequentially stacked on the opposed surface of the lower glass substrate 44, a resin layer 33 having a large number of protrusions and recesses, a reflection film 35 consisting of a metal such as aluminum, the resin layer 33 and the reflection film 35 constituting a reflection member 30, a flattening layer 41, a plurality of stripe-like lower transparent electrodes 51 consisting of indium tin oxide (hereinafter referred to as ITO) and an orientation film 53.

On the opposed surface of the upper glass substrate 43, there are sequentially stacked color filter layers 60, an overcoat layer 42, a plurality of stripe-like upper transparent electrodes 50 consisting of ITO, and an orientation film 52. Between the orientation films 52 and 53 of the upper and lower glass substrates 43 and 44, an STN liquid crystal layer 45 is sealed in.

Outside the upper glass substrate 43, there are sequentially provided a first phase plate 46, a second phase plate 47 and a polarizing plate 48.

The plurality of lower transparent electrodes 51 extend laterally in Fig. 8 and are arranged side by side at predetermined intervals. The plurality of upper transparent electrodes 20 extend in a direction in which they pass through the plane of Fig. 1, and are arranged side by side at predetermined intervals.

The inter-electrode pitch of these upper and lower transparent electrodes 50 and 51 and the shorter side width of each electrode are the same as those of the electrodes 20 and 21 shown in Fig. 1.

The color filters 60 consist of a plurality of elongated rectangular colored layers 60a formed in correspondence with the upper transparent electrodes 50. The arrangement of the colored layers 60a of the color filters 60 is such that they are arranged alternately longitudinally or laterally in a stripe-like manner in the order of red (R), green (G) and blue (B).

The shorter side width W1 of each colored layer 60a is not less than 80% of the shorter side width W2 of the corresponding upper transparent electrode 50, and they are provided so as not to overlap the adjacent colored layers.

When the shorter side width of each colored layer 60a is less than 80% of the shorter side width of the corresponding upper transparent electrode 50, a reduction in chromaticity occurs, and the color display quality deteriorates, and when it overlaps the adjacent colored layer, a step is generated where they overlap each other, resulting in a deterioration in display quality due to orientation unevenness.

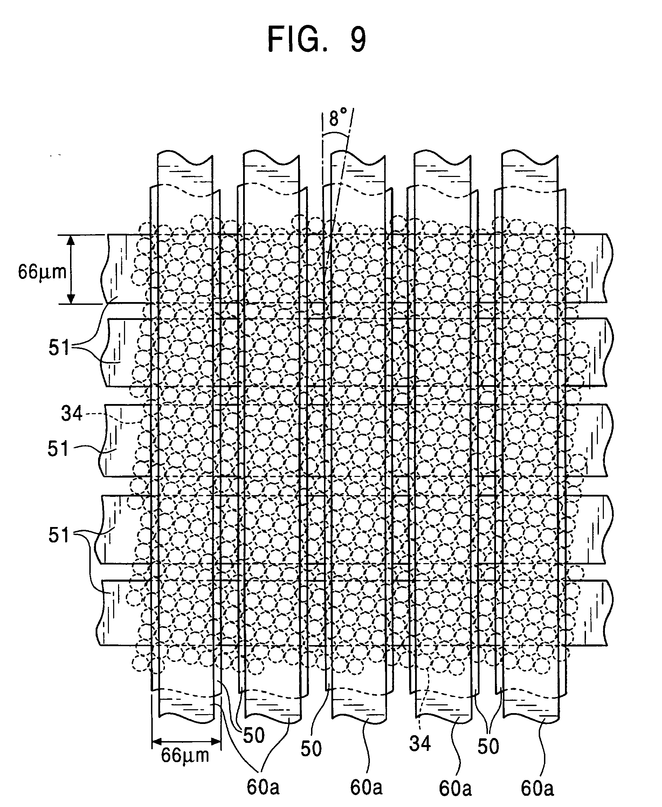

The reflection member 30 is of the same construction as the reflection member 1 shown in Fig. 2 excluding the substrate 2. That is, the resin layer 33 corresponds to the resin layer 3 in Fig. 2, and the reflection film 35 corresponds to the reflection film 5 in Fig. 2. Thus, as shown in Fig. 9, the large number of recesses 34 in this reflection member 30 are of the same construction as the recesses 4 shown in Figs. 2 and 6.

Thus, in this embodiment also, as shown in Fig. 9, the recesses 34 of the reflection member 30 are arranged beforehand in a direction which makes an angle of 8 degrees with respect to the direction in which the stripe-like transparent electrodes 50 extend. Similarly, the rows of recesses 34 of the reflection member 30 are arranged beforehand in a direction which makes an angle of 8 degrees with respect to the direction in which the colored pixels 60a of the color filters are arranged.

The pitch of the moire fringe generated as a result of superimposing of the reflection member 30, the transparent electrodes 50 and the colored pixels 60a is approximately 107 µm, so that the moire fringe is not easily viewed.

As in the above-described comparative example not according to the invention, in the reflection type color liquid crystal display device of the present invention, the reflection member 30 may be provided on the outer side of the lower substrate 44 instead of providing it on the inner side thereof. Further, instead of providing the providing the color filters 60 on the upper substrate 43 side, it is possible to provide them on the lower substrate 44 side. For example, it is possible to adopt a construction in which the color filters 60 and the overcoat layer 42 are sequentially provided on the reflection member 30 and in which the flattening layer 41 is omitted. Further, it goes without saying that the reflection member of the present invention is applicable not only to an STN (super twisted nematic) type but also to a TN (twisted nematic) type liquid crystal display device, for example, a TFT type liquid crystal display device.

As described above, the direction in which the stripe-like display electrodes extend is deviated by 8 degrees from the direction in which a large number of recesses of the reflection member are repeatedly arranged, whereby the moire fringe is not conspicuous, and it is possible to obtain a bright display with high display quality. Further, since the depth of the recesses and the pitch of the adjacent recesses of the reflection plate vary within predetermined ranges, there is no interference of light, and the reflection efficiency is enhanced in all directions, whereby it is possible to obtain a bright display quality.

Furthermore, the direction in which the colored layers of the color filters are arranged is deviated by 8 degrees from the direction in which a large number recesses of the reflection member are repeatedly arranged, whereby the moire fringe is not conspicuous, and it is possible to obtain a bright display with high display quality. Further, since the depth of the recesses and the pitch of the adjacent recesses of the reflection plate vary within predetermined ranges, there is no interference of light, and the reflection efficiency is enhanced in all directions, whereby it is possible to obtain a bright display quality.

## Claims

1. A reflection type liquid crystal display device comprising an upper substrate (13, 43) and a lower substrate (14, 44), a liquid crystal layer (15, 45) provided between the upper and lower substrates, a plurality of stripe-like transparent electrodes (20, 21, 50, 51) formed on the side of at least one of the opposed surfaces of the upper and lower substrates so as to extend in a predetermined direction, and a reflection member (1, 30) arranged on the liquid crystal layer side of the lower substrate or on the opposite surface side thereof; wherein the reflection member has a large number of recesses (4) arranged in a direction which is offset by a predetermined angle from the direction in which the stripe-like transparent electrodes (20, 50) extend**; characterised in that** said angle is equal to 8 degrees, and that the inner surfaces of the recesses constitute part of spherical surfaces and are formed so that adjacent recesses overlap each other, the depth of the recesses and the pitch of adjacent recesses varying within predetermined ranges.

2. A reflection type liquid crystal display device according to Claim 1, including a plurality of color filters (60) formed of elongated rectangularly shaped colored layers (60a) provided on one of the opposed sides of the upper and lower substrates, each being aligned with a corresponding stripe-like electrode (50), wherein the direction in which the recesses are arranged is also deviated by an angle of 8 degrees from the direction in which the elongated rectangular colored layers (60a) extend, and the shorter side width (W1) of each elongated rectangular colored layer is not less than 80% of the shorter side width (W2) of the corresponding stripe-like electrode (50).

3. A reflection type liquid crystal display device according to Claim 1, wherein the plurality of stripe-like transparent electrodes are formed in parallel at predetermined intervals on eachone of the opposed surfaces of the pair of substrates, the opposed stripe-like transparent electrodes being orthogonal to each other, the recesses are formed so as to be arranged in two directions orthogonal to each other with adjacent recesses overlapping each other, and each of the two directions in which the large number of recesses are arranged are deviated by an angle of 8 degrees from one of the respective orthogonal directions in which the stripe-like transparent electrodes orthogonally extend.

4. A reflection type liquid crystal display device according to Claim 3, including a plurality of color filters (60) formed of elongated rectangularly shaped colored layers (60a) provided on the side of one of the opposed surfaces of the substrates, wherein the elongated rectangular colored layers (60a) are aligned in two orthogonal direction which are identical with the two orthogonal directions in which the stripe-like electrodes orthogonally extend, each of the colored layers being aligned with a corresponding stripe-like electrode (50), and the shorter side width (W1) of each elongated rectangular colored layer is not less than 80% of the shorter side width (W2) of the corresponding stripe-like electrode.

## Patentansprüche

1. Reflektierende Flüssigkristall-Anzeigevorrichtung mit einem oberen Substrat (13, 43) und einem unteren Substrat (14, 44), mit einer Flüssigkristallschicht (15, 45), die zwischen dem oberen und dem unteren Substrat vorgesehen ist, mit einer Mehrzahl streifenartiger transparenter Elektroden (20, 21, 50, 51), die substratoberflächenseitig, und zwar geltend für wenigstens eine der einander gegenüberliegenden Oberflächen des oberen und des unteren Substrats, in einer vorbestimmten Richtung verlaufend ausgebildet sind, sowie mit einem Reflexionselement (1, 30), das auf der Flüssigkristallschicht-Seite des unteren Substrats oder auf der entgegengesetzten Oberflächenseite von diesem angeordnet ist, wobei das Reflexionselement eine große Anzahl von Vertiefungen (4) aufweist, die in einer Richtung angeordnet sind, die um einen vorbestimmten Winkel von der Richtung versetzt ist, in der die streifenartigen transparenten Elektroden (20, 50) verlaufen,
**dadurch gekennzeichnet, dass** der genannte Winkel 8° beträgt und dass die inneren Oberflächenbereiche der Vertiefungen Bestandteil von Kugelflächen sind sowie derart ausgebildet sind, dass einander benachbarte Vertiefungen einander überlappen, wobei die Tiefe der Vertiefungen und die Mittenbeabstandung einander benachbarter Vertiefungen innerhalb vorbestimmter Bereiche variieren.

2. Reflektierende Flüssigkristall-Anzeigevorrichtung nach Anspruch 1, mit einer Mehrzahl von Farbfiltern (60), die aus länglichen, rechteckig ausgebildeten Farbschichten (60a) gebildet sind, die auf einer der einander gegenüberliegenden Seiten des oberen und des unteren Substrats vorgesehen sind und jeweils mit einer entsprechenden streifenartigen Elektrode (50) ausgerichtet sind, wobei die Richtung, in der die Vertiefungen angeordnet sind, ebenfalls um einen Winkel von 8° von der Richtung versetzt ist, in der die länglichen rechteckigen Farbschichten (60a) verlaufen, wobei die Breite (W1) der kürzeren Seite jeder länglichen rechteckigen Farbschicht nicht geringer ist als 80% der Breite (W2) der kürzeren Seite der entsprechenden streifenartigen Elektrode (50).

3. Refrektierende Flüssigkristall-Anzeigevorrichtung nach Anspruch 1, wobei die Mehrzahl der streifenartigen transparenten Elektroden in vorbestimmten Intervallen auf jeder der einander gegenüberliegenden Oberflächen des Paars von Substraten parallel ausgebildet sind, wobei die einander gegenüberliegenden streifenartigen transparenten Elektroden orthogonal zueinander sind, wobei die Vertiefungen derart ausgebildet sind, dass sie in zwei zueinander orthogonalen Richtungen angeordnet sind, wobei einander benachbarte Vertiefungen einander überlappen, und wobei jede der beiden Richtungen, in denen die große Anzahl der Vertiefungen angeordnet ist, um einen Winkel von 8° von einer der jeweiligen orthogonalen Richtungen versetzt ist, in denen die streifenartigen transparenten Elektroden orthogonal verlaufen.

4. Reflektierende Flüssigkristall-Anzeigevorrichtung nach Anspruch 3, mit einer Mehrzahl von Farbfiltern (60), die aus länglichen rechteckig ausgebildeten Farbschichten (60a) gebildet sind, die substratoberflächenseitig, und zwar geltend für eine der einander gegenüberliegenden Oberflächen der Substrate, vorgesehen sind, wobei die länglichen rechteckigen Farbschichten (60a) in zwei orthogonalen Richtungen ausgerichtet sind, die mit den beiden orthogonalen Richtungen identisch sind, in denen die streifenartigen Elektroden orthogonal verlaufen, wobei jede der Farbschichten mit einer entsprechenden streifenartigen Elektrode (50) ausgerichtet ist und wobei die Breite (W1) der kürzeren Seite jeder länglichen rechteckigen Farbschicht nicht geringer ist als 80% der Seite (W2) der kürzeren Breite der entsprechenden streifenartigen Elektrode.

## Revendications

1. Dispositif d'affichage à cristaux liquides du type à réflexion comprenant un substrat supérieur (13, 43) et un substrat inférieur (14, 44), une couche de cristaux liquides (15, 45) disposée entre les substrats supérieur et inférieur, une pluralité d'électrodes transparentes en forme de bande (20, 21, 50, 51) formées sur le côté d'au moins l'une des surfaces opposées des substrats supérieur et inférieur de manière à s'étendre dans une direction prédéterminée, et un élément de réflexion (1, 30) agencé sur le côté couche de cristaux liquides du substrat inférieur ou sur le côté de surface opposée de celui-ci, dans lequel l'élément de réflexion a un grand nombre de renfoncements (4) disposés dans une direction qui est décalée d'un angle prédéterminé par rapport à la direction dans laquelle s'étendent les électrodes transparentes en forme de bande (20, 21, 50, 51), **caractérisé en ce que** ledit angle est égal à 8 degrés, et que les surfaces internes des renfoncements constituent des parties de surfaces sphériques et sont formées de telle manière que les renfoncements adjacents se chevauchent l'un l'autre, la profondeur des renfoncements et le pas de renfoncements adjacents variant dans des plages prédéterminées.

2. Dispositif d'affichage à cristaux liquides du type à réflexion selon la revendication 1, incluant une pluralité de filtres couleur (60) formés de couches colorées allongées de forme rectangulaire (60a) disposées sur l'un des côtés opposés des substrats supérieur et inférieur, chacun étant aligné avec une électrode en forme de bande (50) correspondante, dans lequel la direction dans laquelle les renfoncements sont disposés est également déviée d'un angle de 8 degrés par rapport à la direction dans laquelle s'étendent la pluralité de couches colorées allongées rectangulaires (60a), et la largeur (W1) du côté plus court de chaque couche colorée allongée rectangulaire n'est pas inférieure à 80% de la largeur (W2) du côté plus court de l'électrode en forme de bande (50) correspondante.

3. Dispositif d'affichage à cristaux liquides du type à réflexion selon la revendication 1, dans lequel la pluralité d'électrodes transparentes en forme de bande sont formées en parallèle à intervalles prédéterminés sur chacune des surfaces opposées de la paire de substrats, les électrodes transparentes en forme de bande opposées étant orthogonales l'une à l'autre, et les renfoncements sont formés de manière à être agencés dans deux directions orthogonales l'une à l'autre avec les renfoncements adjacents se chevauchant l'un l'autre, et chacune des deux directions dans lesquelles le grand nombre de renfoncements sont agencés est déviée d'un angle de 8 degrés par rapport à l'une des directions orthogonales respectives dans lesquelles les électrodes transparentes en forme de bande s'étendent orthogonalement.

4. Dispositif d'affichage à cristaux liquides du type à réflexion selon la revendication 3, incluant une pluralité de filtres couleur (60) formés de couches colorées allongées de forme rectangulaire (60a) disposés sur le côté de l'une des surfaces opposées des substrats, dans lequel les couches colorées allongées rectangulaires (60a) sont alignées dans deux directions orthogonales qui sont identiques aux deux directions orthogonales dans lesquelles les électrodes en forme de bande s'étendent orthogonalement, chacune des couches colorées étant alignée avec une électrode en forme de bande (50) correspondante, et la largeur (W1) du côté plus court de chaque couche colorée allongée rectangulaire n'est pas inférieure à 80% de la largeur (W2) du côté plus court de l'électrode en forme de bande (50) correspondante.
